# EUROPEAN PATENT APPLICATION

(11) **EP 2 579 266 A1**
(43) Date of publication of application: **10.04.2013**
(21) Application number: 11789603.5
(22) Date of filing: 16.05.2011
(51) Int. Cl.: G21K 4/00, G01T 1/20

(54) **SCINTILLATOR PANEL AND RADIATION IMAGE SENSOR**

(30) Priority: 04.06.2010 JP 2010129072
(71) Applicant: Hamamatsu Photonics K.K., Hamamatsu-shi, Shizuoka 435-8558 (JP)
(72) Inventor: TOYAMA, Shintaro, Hamamatsu-shi Shizuoka 435-8558 (JP); KUSUYAMA, Yutaka, Hamamatsu-shi Shizuoka 435-8558 (JP); YAMASHITA, Masanori, Hamamatsu-shi Shizuoka 435-8558 (JP); OSAWA, Hirotake, Hamamatsu-shi Shizuoka 435-8558 (JP); SHIKIDA, Munenori, Hamamatsu-shi Shizuoka 435-8558 (JP)
(74) Representative: Grünecker, Kinkeldey, Stockmair & Schwanhäusser
(86) International application number: PCT/JP2011/061225
(87) International publication number: WO 2011/152194

(57) **Abstract**

A scintillator panel 1 and a radiation image sensor 10 which can achieve higher resolution and higher luminance are provided. The scintillator panel 1 comprises a radiation transmitting substrate 3, adapted to transmit a radiation therethrough, having entrance and exit surfaces 3a, 3b for the radiation; a scintillator 4, adapted to generate light in response to the radiation incident thereon, comprising a plurality of columnar bodies grown as crystals on the exit surface 3b; an FOP 6, arranged on an opposite side of the scintillator 4 from the exit surface 3b, for propagating the light generated by the scintillator 4; and a double-sided tape 5, disposed between the scintillator 4 and the FOP 6, for adhesively bonding the scintillator 4 and the FOP 6 together and transmitting therethrough the light generated by the scintillator 4.

## Description

### Technical Field

The present invention relates to a scintillator panel and a radiation image sensor which are utilized for detecting a radiation.

### Background Art

As a scintillator panel utilized for detecting a radiation, one disclosed in Patent Literature 1 has conventionally been known. Patent Literature 1 discloses a scintillator panel comprising a fiber optics plate which transmits light therethrough, a scintillator formed by vapor deposition on the fiber optics plate, a first poly(p-xylylene) film covering the scintillator, an Al (aluminum) film formed on the first poly(p-xylylene) film, and a second poly(p-xylylene) film formed on the Al film.

### Citation List

### Patent Literature

Patent Literature 1: Japanese Patent Application Laid-Open No. 2005-338067
Patent Literature 2: Japanese Patent Publication No. 5-39558
Patent Literature 3: International Publication WO2004/079396 pamphlet
Patent Literature 4: International Publication WO99/66346 pamphlet
Patent Literature 5: Japanese Patent Application Laid-Open No. 2002-372586

### Summary of Invention

### Technical Problem

Due to market demand, scintillator panels have recently been desired to further improve their performances. However, there has been a trade-off between improvements of resolution and optical output in a scintillator panel, which makes it hard to improve both performances of the resolution and optical output at the same time.

In view of such circumstances, it is an object of the present invention to provide a scintillator panel and a radiation image sensor which can achieve higher resolution and higher luminance.

### Solution to Problem

The scintillator panel comprises a radiation transmitting body, adapted to transmit a radiation therethrough, having entrance and exit surfaces for the radiation; a scintillator, adapted to generate light in response to the radiation incident thereon, comprising a plurality of columnar bodies grown as crystals on the exit surface; a fiber optics plate, arranged on an opposite side of the scintillator from the exit surface, for propagating the light generated by the scintillator; and an adhesive layer, disposed between the scintillator and the fiber optics plate, for adhesively bonding the scintillator and the fiber optics plate together and transmitting therethrough the light generated by the scintillator.

In this scintillator panel, the light generated by the radiation incident thereon is made incident on the fiber optics plate through the leading end of the scintillator constituted by a plurality of columnar bodies and then exits to the outside, so as to be kept from passing through the root side of the scintillator where there is a high possibility of structural distortions occurring in crystal growth. Therefore, this scintillator panel can inhibit light from being scattered or attenuated because of structural distortions within the scintillator, so that the scintillator panel can attain higher resolution and higher luminance.

In the scintillator panel, a depth by which the scintillator intrudes into the adhesive layer may be 10% or less of a thickness of the scintillator in a direction orthogonal to the exit surface. This can appropriately inhibit the light emitted from the leading end side of the scintillator from being scattered and so forth under the influence of adhesive components of the adhesive layer having intruded into interstices in the scintillator constituted by a plurality of columnar bodies. This contributes to achieving higher resolution and higher luminance in the scintillator panel.

In the scintillator panel, the radiation transmitting body may be a rigid substrate. Such a structure enables the rigidity of the radiation transmitting body to improve the mechanical strength of the scintillator panel. This contributes to extending the life of the scintillator panel.

In the scintillator panel, the radiation transmitting body may be formed into a film. This can attenuate the radiation less than in the case where the radiation transmitting body is formed thicker, so that a sufficient radiation transmittance can be secured. This is also advantageous for thinning the scintillator panel.

The scintillator panel may further comprise a moisture-proof protective film covering the outside of the radiation transmitting body and scintillator. Such a structure can inhibit moisture from entering the scintillator, so that performances of the scintillator can be kept from being worsened by the moisture entering there, whereby the scintillator panel can improve the moisture resistance and extend the life.

The scintillator panel may further comprise a photoresponsive layer, formed on the entrance surface side of the radiation transmitting body, for transmitting the radiation therethrough and performing at least one of reflection and absorption of the light generated by the scintillator. Even when a part of the light generated by the scintillator advances to the side opposite from the fiber optics plate, the light reflected by the photoresponsive layer and then made incident on the fiber optics plate, if any, can increase the optical output in such a structure. When the light is absorbed by the photoresponsive layer, on the other hand, crosstalk components interfering with other kinds of the light are also absorbed, whereby this structure can improve the resolution.

In the scintillator panel, the adhesive layer may have a base and an adhesive provided on both sides of the base. Such a structure can inhibit adhesive components of the adhesive layer from deeply intruding into interstices in the scintillator as compared with the case where a liquid adhesive is used as the adhesive layer. This can restrain the light from being scattered and so forth under the influence of the adhesive components having intruded into interstices in the scintillator, which is advantageous for achieving higher resolution in the scintillator panel.

The radiation image sensor comprises the scintillator panel and an image pickup device for capturing an image of the light propagated by the fiber optics plate. Since the scintillator panel attains higher resolution and higher luminance as mentioned above, this radiation image sensor can achieve higher resolution and higher luminance.

### Advantageous Effects of Invention

The present invention can achieve higher resolution and higher luminance in the scintillator panel and radiation image sensor.

### Brief Description of Drawings

Fig. 1 is a sectional view illustrating a first embodiment of the scintillator panel and radiation image sensor in accordance with the present invention;
Fig. 2(a) is a diagram illustrating a bonding state between the leading end of a scintillator and a double-sided tape, while Fig. 2(b) is a diagram illustrating a bonding state between the leading end of a scintillator and an adhesive;
Fig. 3 (a) is a photograph illustrating a bonding state between the leading end of a scintillator and a double-sided tape, while Fig. 3(b) is an enlarged photograph of the leading end of the scintillator in Fig. 3(a);
Fig. 4 (a) is a photograph illustrating a bonding state between the leading end of a scintillator and a liquid adhesive, while Fig. 4(b) is an enlarged photograph of the leading end of the scintillator in Fig. 4(a);
Fig. 5 (a) is a photograph illustrating a bonding state between the leading end of a scintillator and a liquid adhesive applied thicker than in Fig. 4, while Fig. 5(b) is an enlarged photograph of the leading end of the scintillator in Fig. 5(a);
Fig. 6 is a sectional view illustrating a second embodiment of the scintillator panel in accordance with the present invention;
Fig. 7 is a sectional view illustrating a third embodiment of the scintillator panel in accordance with the present invention;
Fig. 8 is a graph illustrating the relationship between the optical output and resolution of the scintillator panel in accordance with the third embodiment and the color of its paint layer; and
Fig. 9 is a sectional view illustrating a fourth embodiment of the scintillator panel in accordance with the present invention.

### Description of Embodiments

In the following, preferred embodiments of the present invention will be explained in detail with reference to the drawings. In the drawings, the same or equivalent parts will be referred to with the same signs while omitting their overlapping descriptions.

### First Embodiment

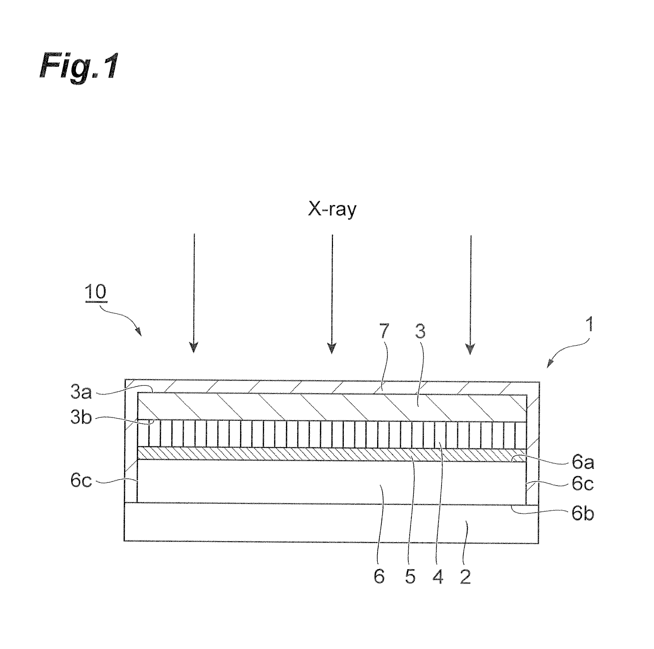

As illustrated in Fig. 1, the scintillator panel 1 in accordance with the first embodiment converts a radiation such as an X-ray into scintillation light and constitutes a radiation image sensor 10 together with an image pickup device 2 which can capture an image of the scintillation light. As the image pickup device 2 constituting the radiation image sensor 10, a combination of a thin-film transistor with a photodiode array, a CCD image sensor, or the like is employed.

The scintillator panel 1 is constituted by a radiation transmitting substrate 3, a scintillator 4, a double-sided tape 5, a fiber optics plate (hereinafter referred to as FOP) 6, and a moisture-proof protective film 7.

For example, the radiation transmitting substrate 3 is a rigid substrate which is constructed by a material such as aluminum, carbon, graphite, or glass and resistant to deformation by external forces. The radiation transmitting substrate 3 has entrance and exit surfaces 3a, 3b for the radiation, so that the radiation incident on the entrance surface 3a passes through the radiation transmitting substrate 3, so as to be emitted from the exit surface 3b. The radiation transmitting substrate 3 corresponds to the radiation transmitting body recited in the claims.

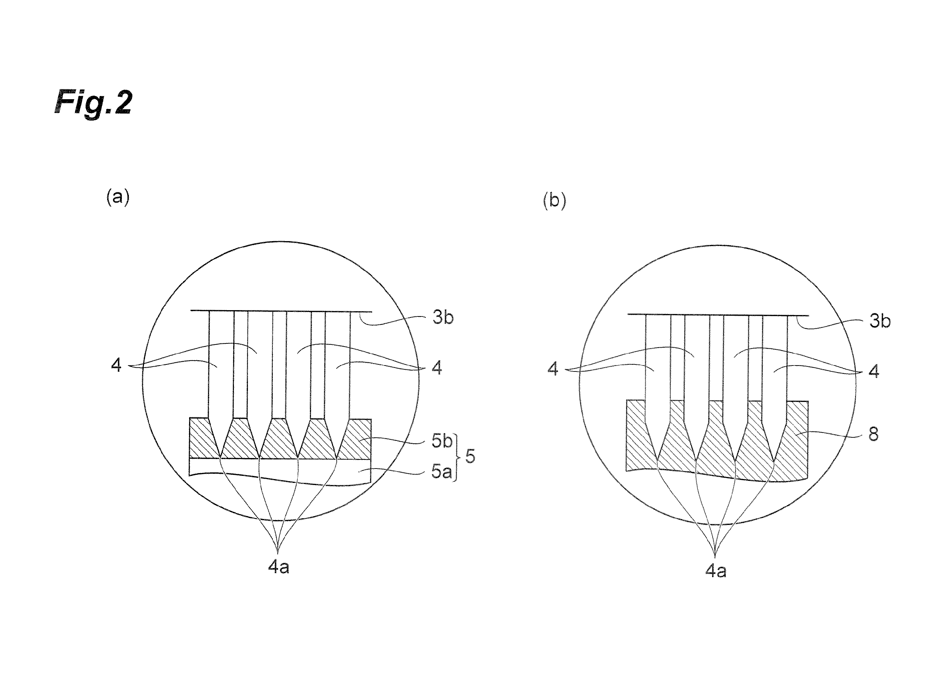

The scintillator 4 is a phosphor made of CsI (cesium iodide) doped with Tl (thallium) and converts the radiation incident thereon into scintillation light. The scintillator 4 is formed by growing crystals of CsI by vapor deposition on the exit surface 3b of the radiation transmitting substrata 3. The scintillator 4 formed by vapor deposition is constituted by a plurality of acicular crystals each having a root on the exit surface 3b side of the radiation transmitting substrate 3 and a leading end 4a on the side opposite from the exit surface 3b (see Fig. 2(a)). The acicular crystal corresponds to the columnar body recited in the claims.

The double-sided tape 5 is a member for adhesively bonding the leading end 4a side of the scintillator 4 and the FOP 6 together. The double-sided tape 5 is constituted by a thin film-shaped base 5a made of a synthetic resin or the like and an adhesive 5b provided on both sides of the base 5a (see Fig. 2(a)). Employed as the double-sided tape 5 is one which transmits therethrough the light generated by the scintillator 4. The double-sided tape 5 corresponds to the adhesive layer recited in the claims.

The FOP 6 is one in which a number of optical fibers are bundled together, so as to be formed into a plate. One main face 6a of the FOP 6 is secured to the leading end 4a side of the scintillator 4 by the double-sided tape 5. The image pickup device 2 is provided on the other main face 6b of the FOP 6. The FOP 6 propagates the light incident on the main face 6a after being generated by the scintillator 4 to the main face 6b side, i.e., to the image pickup device 2 side.

The moisture-proof protective film 7 is a moisture-proof protective film which prevents moisture from entering the scintillator panel 1. The moisture-proof protective film 7 is constituted by poly(p-xylylene), for example. The moisture-proof protective film 7 covers the outside of the radiation transmitting substrate 3, scintillator 4, and double-sided tape 5 and a side face 6c of the FOP 6.

Results of a test concerning bonding methods between the scintillator 4 and FOP 6 conducted by the inventors will now be explained. The inventors conducted a comparative test between the bonding state of the leading end 4a of the scintillator 4 with the double-sided tape 5 and the bonding state of the leading end 4a of the scintillator 4 with a liquid adhesive 8.

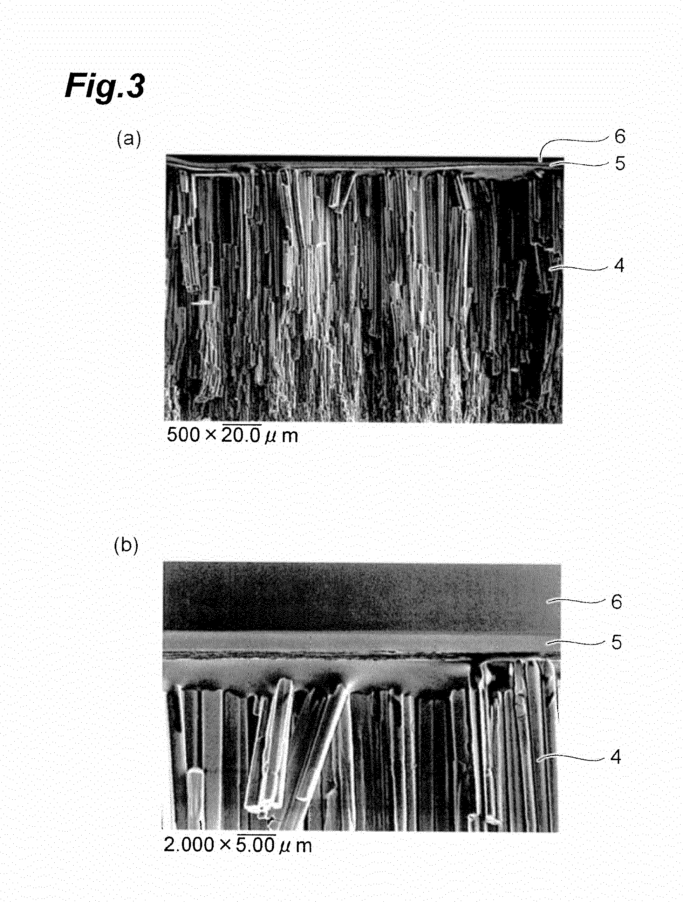

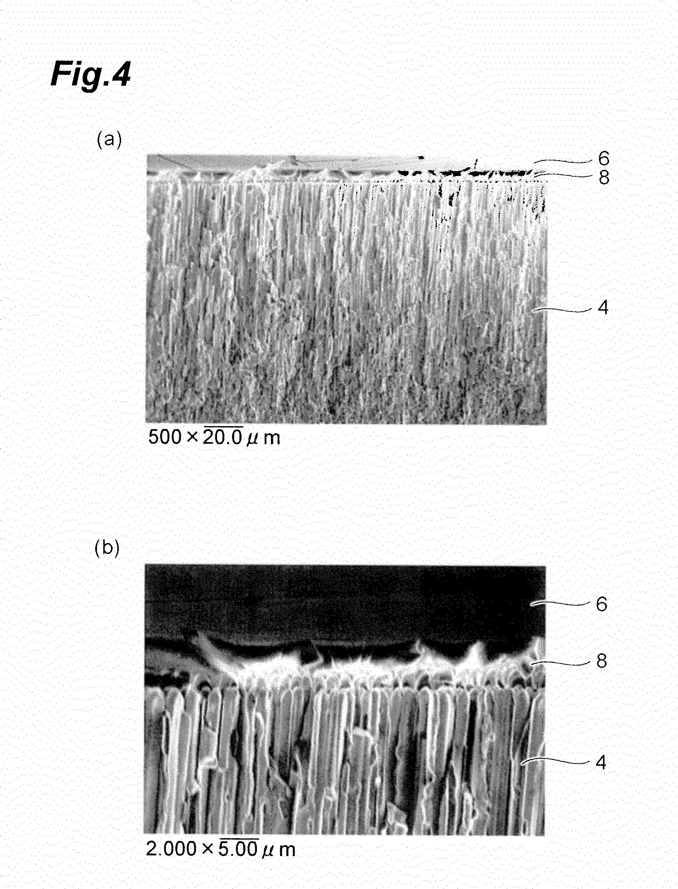

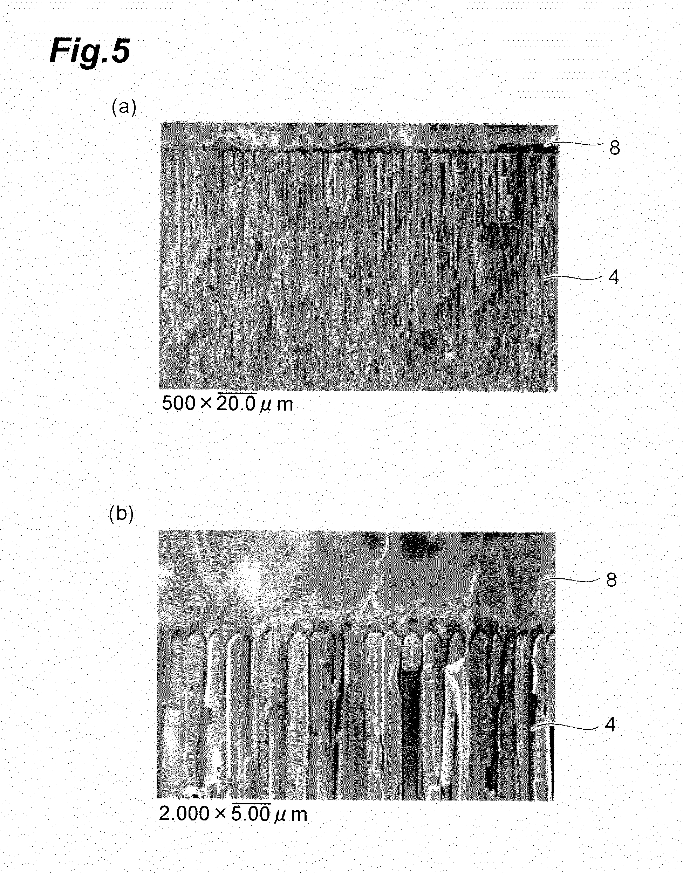

Fig. 2(a) is a diagram illustrating the bonding state between the leading end 4a of the scintillator 4 and the double-sided tape 5, while Fig. 2(b) is a diagram illustrating the bonding state between the leading end 4a of the scintillator 4 and the liquid adhesive 8 when using the latter in place of the double-sided tape 5. Fig. 3 is a photograph illustrating the bonding state between the leading end 4a of the scintillator 4 and the double-sided tape 5, while Fig. 4 is a photograph illustrating the bonding state between the leading end 4a of the scintillator 4 and the liquid adhesive 8. Fig. 5 is a photograph illustrating the bonding state between the leading end 4a of the scintillator 4 and the liquid adhesive 8 applied thicker than in Fig. 4.

In the photograph of Fig. 3, double-sided tape No. 5601 manufactured by Nitto Denko Corporation having an acrylic adhesive is used as the double-sided tape 5. In the photographs of Fig. 4 and 5, epoxy-based liquid adhesive 2023 manufactured by ThreeBond Co., Ltd. is used as the liquid adhesive 8 (with 2131D manufactured by the same company as a curing agent). The liquid adhesive 2023 manufactured by ThreeBond Co., Ltd. is a so-called low-viscosity adhesive and has a viscosity of 0.9191 (Pa·s) at a temperature of 25°C. Table 1 shows results of tests concerning bonding methods and the thickness of the adhesive component covering the scintillator 4. The thickness of the adhesive component covering the scintillator 4 corresponds to the depth by which the scintillator 4 intrudes into the adhesive component, i.e., the adhesive 5b of the double-sided tape 5 or the liquid adhesive 8.

**[Table 1]**

| Bonding method | Thickness (*µ* m) | Scintillator covering thickness (*µ* m) |
|---|---|---|
| Double-sided tape | 10 | 3~4 |
| Law-viscosity adhesive | 10 | 100 |
| Low-viscosity adhesive | 70 | 100 |

As illustrated in Table 1 and Figs. 2 to 4, the depth by which the scintillator 4 intruded into the adhesive 5b of the double-sided tape 5 was remarkably smaller than the depth by which the scintillator 4 intruded into the liquid adhesive 8. The depth by which the scintillator 4 intruded did not vary when the thickness of the liquid adhesive 8 was changed from 10 µm to 70 µm.

The resolution was seen to become lower as the scintillator 4 intruded into the adhesive 5b or liquid adhesive 8 more deeply. This seems to be because light is more likely to be scattered under the influence of adhesive components as the scintillator 4 intrudes more deeply. Therefore, the depth by which the scintillator 4 intrudes may be kept small. That is, a space may be formed between the acicular crystals. Specifically, the depth by which the scintillator 4 intrudes into the adhesive 5b or liquid adhesive 8 may remain in pointed end parts of its acicular crystals without reaching columnar parts thereof. The depth by which the scintillator 4 intrudes may be 30% or less, 10% or less in particular, of the thickness of the scintillator 4 in a direction orthogonal to the exit surface 3b. Adhesively bonding the leading end 4a side of the scintillator 4 and the FOP 6 so as to attain such a state can appropriately inhibit light from being scattered under the influence of adhesive components having intruded into interstices in the scintillator 4. This contributes to achieving higher resolution and higher luminance in the scintillator panel 1.

Using the liquid adhesive 8 having a higher viscosity can reduce the depth by which the scintillator 4 intrudes. However, this makes it easier for bubbles to occur within the liquid adhesive 8 when bonding the scintillator 4 and the FOP 6 together, which makes it more likely to necessitate deforming.

From the foregoing test results, the double-sided tape 5 seems to be more employable than the liquid adhesive 8 as a method of bonding the scintillator 4 and the FOP 6 together. Using the double-sided tape 5 as the bonding method can make the scintillator 4 intrude into the adhesive 5b or liquid adhesive 8 less deeply than in the case where the liquid adhesive 8 is used.

A method of manufacturing the scintillator panel 1 in accordance with the first embodiment will now be explained with reference to Fig. 1.

First, a scintillator forming step for forming the scintillator 4 on the exit surface 3b of the radiation transmitting substrate 3 is performed. The scintillator forming step initially heats the radiation transmitting substrate 3. Thereafter, while rotating the radiation transmitting substrate 3, acicular crystals of CsI doped with Tl are grown by vapor deposition on the exit surface 3b, so as to form the scintillator 4.

Next, an adhesive bonding step for adhesively bonding the leading end 4a side of the scintillator 4 and the FOP 6 is performed. The adhesive bonding step bonds the leading end 4a side of the scintillator 4 to the main face 6a of the FOP 6 with the double-sided tape 5, so as to achieve adhesive bonding.

Thereafter, a protective film forming step for forming the moisture-proof protective film 7 is performed. The protective film forming step initially puts the FOP 6 into a vapor deposition chamber of a CVD (Chemical Vapor Deposition) system. Then, the moisture-proof protective film 7 covering the radiation transmitting substrate 3, scintillator 4, and FOP 6 is formed by a CVD process in which the FOP 6 is exposed to a vapor obtained by subliming materials for poly(p-xylylene). The foregoing steps manufacture the scintillator panel 1 in accordance with the first embodiment.

Operations and effects of the scintillator panel 1 in accordance with the first embodiment will now be explained.

In the scintillator panel 1 in accordance with the first embodiment, the scintillation light generated by the scintillator 4 in response to a radiation incident thereon is made incident on the FOP 6 through the leading end 4a, so as to be fed to the image pickup device 2, which can keep light from passing through the root side of the scintillator 4 where there is a high possibility of structural distortions occurring in crystal growth. Therefore, this scintillator panel 1 can inhibit light from being scattered or attenuated because of structural distortions within the scintillator 4, so that the scintillator panel 1 can attain higher resolution and higher luminance.

The scintillator panel 1 can improve its mechanical strength by the rigidity of the radiation transmitting substrate 3. This contributes to extending the life of the scintillator panel 1.

Since the scintillator panel 1 uses the double-sided tape 5 as a bonding method, the adhesive 5b adheres to the base 5a more closely and is less likely to intrude into interstices in the scintillator 4, which can suppress the covering thickness of the scintillator 4, i.e., the thickness by which adhesive components intrude into interstices in the scintillator 4 constituted by a plurality of acicular crystals. This can keep light from scattering and so forth under the influence of adhesive components having intruded into interstices in the scintillator 4, which is advantageous for achieving higher resolution in the scintillator panel 1.

In the scintillator panel 1, the moisture-proof protective film 7 covering the outside of the radiation transmitting substrate 3 and scintillator 4 can inhibit moisture from entering the scintillator 4, so that performances of the scintillator 4 can be kept from being worsened by the moisture entering there, whereby the scintillator panel 1 can improve the moisture resistance and extend the life.

Achieving higher resolution and higher luminance in the scintillator panel 1 enables the radiation image sensor 10 to attain higher resolution and higher luminance.

The inventors conducted a comparative test between the cases where the leading end 4a side of the scintillator 4 in the first embodiment was polished so as to form a surface substantially parallel to the exit surface 3b and not. Table 2 illustrates the comparison results in the resolution and optical output of the scintillator panel. Table 2 performed relative evaluations while taking the case without polishing the scintillator leading end as a reference (100%).

**[Table 2]**

| Sample | Resolution | Optical output |
|---|---|---|
| Scintillator leading end not polished | 100% | 100% |
| Scintillator leading end polished | 97% | 101% |

As Table 2 illustrates, no remarkable difference was seen between the cases where the leading end 4a side of the scintillator 4 was polished and not. Therefore, the present invention is seen to be effectively employable even when the leading end 4a side of the scintillator 4 is polished. The polishing turns a part of acicular crystals of the scintillator 4 into columnar crystals having no pointed end parts. The columnar body recited in the claims also encompasses this mode of columnar crystals as a matter of course.

### Second Embodiment

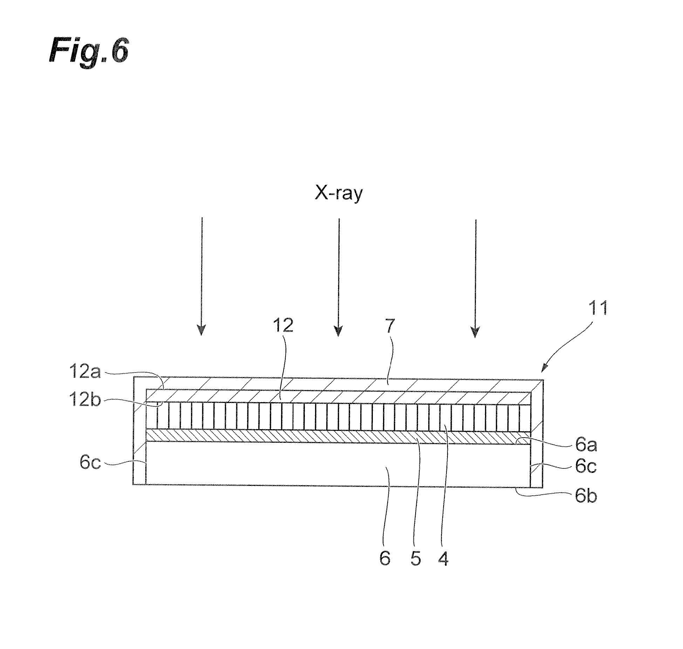

As illustrated in Fig. 6, the scintillator panel 11 in accordance with the second embodiment differs from the scintillator panel 1 in accordance with the first embodiment in that it has a radiation transmitting film 12 in place of the radiation transmitting substrate 3.

The radiation transmitting film 12 is an organic film, an example of which is a film-shaped member constituted by a xylylene-based material such as poly(p-xylylene) or a urea-based material. The radiation transmitting film 12 has a thickness of 1 µm to 100 µm. The radiation transmitting film 12 has entrance and exit surfaces 12a, 12b for the radiation, so that the radiation incident on the entrance surface 12a passes through the radiation transmitting film 12, so as to be emitted from the exit surface 12b. The radiation transmitting film 12 corresponds to the radiation transmitting body recited in the claims.

A method of manufacturing the scintillator panel 11 in accordance with the second embodiment will now be explained with reference to Fig. 6.

First, a release agent coating step for applying a release agent to a surface of a scintillator forming substrate is performed. The release agent is used for releasing the radiation transmitting film 12, which will be formed in the next step, from the substrate. Thereafter, a transmitting film forming step is performed so as to put the substrate into a vapor deposition chamber of a CVD system and form the radiation transmitting film 12 by a CVD process.

Subsequently, a scintillator forming step for forming the scintillator 4 on the radiation transmitting film 12 is performed. The scintillator forming step initially heats the substrate formed with the radiation transmitting film 12. Thereafter, while rotating the substrate, acicular crystals of CsI doped with Tl are grown by vapor deposition on the exit surface 12b, so as to form the scintillator 4.

Next, an adhesive bonding step for adhesively bonding the leading end 4a side of the scintillator 4 and the FOP 6 is performed. The adhesive bonding step bands the leading end 4a side of the scintillator 4 to the main face 6a of the FOP 6 with the double-sided tape 5, so as to achieve adhesive bonding. Thereafter, a releasing step for releasing the radiation transmitting film 12 from the substrate is performed.

After the releasing step, a protective film forming step for forming the moisture-proof protective film 7 is performed. The protective film forming step initially puts the FOP 6 into the vapor deposition chamber of the CVD system and then forms the moisture-proof protective film 7 covering the radiation transmitting substrate film 12, scintillator 4, and FOP 6 by the CVD process. The foregoing steps manufacture the scintillator panel 11 in accordance with the second embodiment.

The scintillator panel 11 in accordance with the second embodiment explained in the foregoing can attenuate the radiation less than in the case where the radiation transmitting film 12 is formed thicker, so that a sufficient radiation transmittance can be secured. This is also advantageous for thinning the scintillator panel 11.

### Third Embodiment

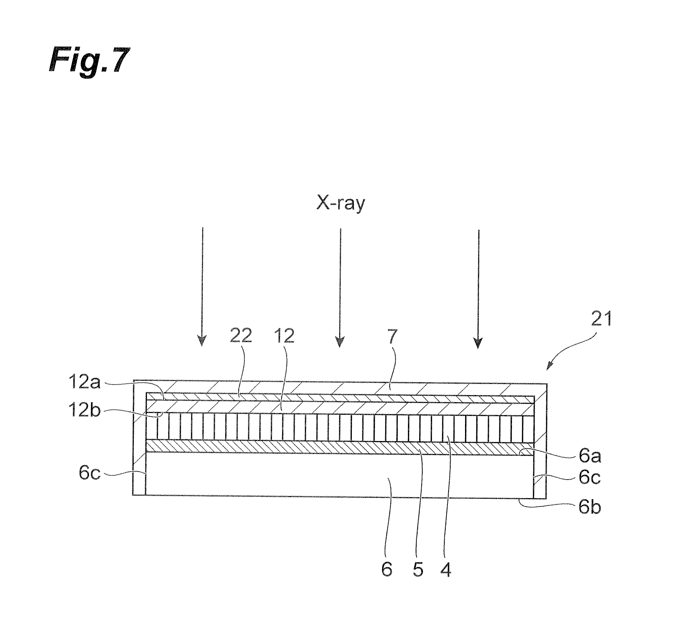

As illustrated in Fig. 7, the scintillator panel 21 in accordance with the third embodiment differs from the scintillator panel 11 in accordance with the second embodiment in that it has a paint layer 22.

The paint layer 22 is formed by coating the entrance surface 12a of the radiation transmitting film 12 with a paint constituted by a resin containing a color material having a specific color. Usable as such a paint are typical ones in which a resin serving as a binder is dissolved in an organic solvent or the like and mixed with a pigment as a color material to become a coloring component. Various types of paints such as enamel, lacquer, and urethane can be utilized. As a method of applying the paint, spray coating in which the paint is sprayed like a mist or the like is used.

The paint layer 22 absorbs or reflects the scintillation light generated by the scintillator 4. The light absorptance and reflectance in the paint layer 22 can be adjusted by changing the color of the paint. The paint layer 22 is formed such as to transmit therethrough a radiation such as an X-ray. The paint layer 22 functions as the photoresponsive layer recited in the claims. Not only the paint layer 22, but an Al (aluminum) layer mainly composed of Al, for example, may also be used as the photoresponsive layer.

The outside of the paint layer 22 is covered with the moisture-proof protective film 7. The scintillator panel 21 in accordance with the third embodiment is manufactured by providing a paint layer forming step (photoresponsive layer forming step) for forming the paint layer 22 on the entrance surface 12a of the radiation transmitting film 12 before the protective film forming step in the second embodiment.

Even when a part of the light generated by the scintillator 4 advances to the side opposite from the FOP 6, the light reflected by the paint layer 22 and then made incident on the FOP 6, if any, can increase the optical output in the scintillator panel 21 in accordance with the third embodiment explained in the foregoing. When the light is absorbed by the paint layer 22, on the other hand, crosstalk components interfering with other kinds of the light are also absorbed, whereby the resolution can be improved.

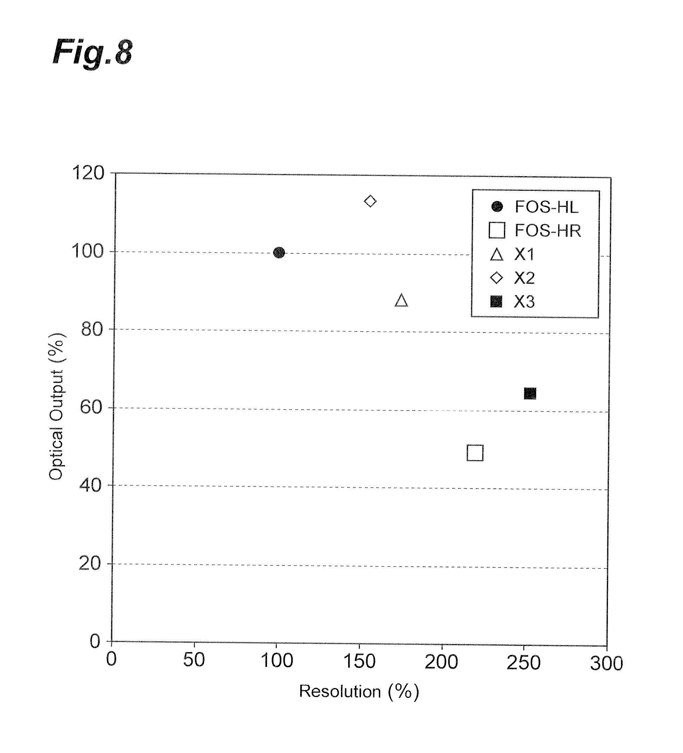

Fig. 8 is a graph illustrating the relationship between the optical output and resolution of the scintillator panel 21 in accordance with the third embodiment and the color of its paint layer 22. In Fig. 8, X1, X2, and X3 represent respective cases using no paint layer 22, an acrylic white paint in the paint layer 22, and a carbon-based black paint in the paint layer 22. Table 3 lists the resolution and optical output of scintillator panels corresponding to the above-mentioned cases X1 to X3 in numerical values. Fig. 8 and Table 3 performed relative evaluations, while a scintillator panel (hereinafter referred to as "type A"; specifically, a structure in which an FOP, a scintillator, a first protective film, an aluminum reflective film, and a second protective film were arranged in this order as illustrated in Fig. 1 of International Publication WO99/66350) in which a reflective film made of Al (aluminum) was formed on the radiation entrance side of the scintillator so as to enhance its luminance characteristic was taken as a reference (100%). Also represented as a comparative example are the resolution and optical output of a scintillator panel (hereinafter referred to as "type B"; specifically, a structure in which an FOP, a scintillator, an absorptive metal film, and a protective film were arranged in this order) in which, unlike the type A, the resolution characteristic was enhanced without forming the reflective film.

**[Table 3]**

| Sample | Resolution | Optical output |
|---|---|---|
| Type A | 100% | 100% |
| Type B | 219% | 49% |
| X1 | 174% | 88% |
| X2 | 154% | 113% |
| X3 | 252% | 64% |

As illustrated in Fig. 8 and Table 3, the scintillator panels 21 were obtained with various kinds of optical output and resolution by changing the color of the paint layer 22. The scintillator panel 21 using the white paint exhibited higher optical output and lower resolution as compared with the other scintillator panels, while the scintillator panel 21 using the black paint exhibited lower optical output and higher resolution as compared with the other scintillator panels. Therefore, the scintillator panel 21 can easily change its characteristics by varying the color material constituting the paint layer 22 so as to alter the light reflectance and absorptance in the paint layer 22.

### Fourth Embodiment

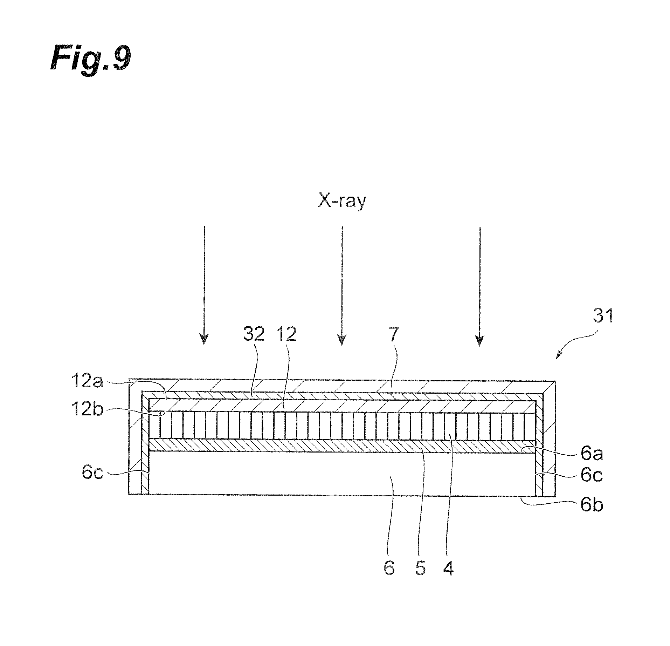

As illustrated in Fig. 9, the scintillator panel 31 in accordance with the fourth embodiment differs from the scintillator panel 21 in accordance with the third embodiment in the form of the paint layer.

The paint layer 34 in the fourth embodiment is formed so as to cover not only the entrance surface 12a of the radiation transmitting film 12 but also the radiation transmitting film 12, the scintillator 4, the double-sided tape 5, and the side face 6c of the FOP 6 by projecting laterally of the radiation transmitting film 12. The outer periphery of the paint layer 32 is exposed to the outside on the same plane as the main face 6b of the FOP 6.

The scintillator panel 31 in accordance with the fourth embodiment explained in the foregoing can yield effects similar to those of the scintillator panel 21 in accordance with the third embodiment.

The present invention is not limited to the above-mentioned embodiments. For example, the adhesive layer for adhesively bonding the scintillator 4 to the FOP 6 is not limited to the double-sided tape 5, but may be any of various adhesive members such as liquid adhesives.

Not only CsI doped with Tl, but CsI doped with Na (sodium), NaI (sodium iodide) doped with Tl, LiI (lithium iodide) doped with Eu (europium), KI (potassium iodide) doped with Tl, and the like can also be utilized as the scintillator 4.

### Industrial Applicability

The present invention is employable in scintillator panels and radiation image sensors.

### Reference Signs List

1, 11, 21, 31... scintillator panel; 2... image pickup device; 3...radiation transmitting substrate; 3a...entrance surface; 3b...exit surface; 4... scintillator; 4a... leading end; 5... double-sided tape; 5a...base; 5b...adhesive; 7... moisture-proof protective film; 10...radiation, image sensor; 12... radiation transmitting film; 12a...entrance surface; 12b...exit surface; 22...paint layer

## Claims

1. A scintillator panel comprising:
a radiation transmitting body, adapted to transmit a radiation therethrough, having entrance and exit surfaces for the radiation;
a scintillator, adapted to generate light in response to the radiation incident thereon, comprising a plurality of columnar bodies grown as crystals on the exit surface;
a fiber optics plate, arranged on an opposite side of the scintillator from the exit surface, for propagating the light generated by the scintillator; and
an adhesive layer, disposed between the scintillator and the fiber optics plate, for adhesively bonding the scintillator and the fiber optics plate together and transmitting therethrough the light generated by the scintillator.

2. A scintillator panel according to claim 1, wherein the scintillator intrudes into the adhesive layer by 30% or less of a thickness of the scintillator in a direction orthogonal to the exit surface.

3. A scintillator panel according to claim 1 or 2, wherein the radiation transmitting body is a rigid substrate.

4. A scintillator panel according to claim 1 or 2, wherein the radiation transmitting body is formed into a film.

5. A scintillator panel according to one of claims 1 to 4, further comprising a moisture-proof protective film covering the outside of the radiation transmitting body and scintillator.

6. A scintillator panel according to one of claims 1 to 5, further comprising a photoresponsive layer, formed on the entrance surface side of the radiation transmitting body, for transmitting the radiation therethrough and performing at least one of reflection and absorption of the light generated by the scintillator.

7. A scintillator panel according to one of claims 1 to 6, wherein the adhesive layer has a base and an adhesive provided on both sides of the base.

8. A radiation image sensor comprising:
the scintillator panel according to one of claims 1 to 7; and
an image pickup device for capturing an image of the light propagated by the fiber optics plate.
